# EUROPÄISCHE PATENTANMELDUNG

(11) **EP 0 579 162 A2**
(43) Veröffentlichungstag der Anmeldung: **19.01.1994**
(21) Anmeldenummer: 93111175.1
(22) Anmeldetag: 13.07.1993
(51) Int. Cl.: A01G 31/02, A01G 13/02

(54) **Bodenabdeckung für Pflanzen**

(30) Priorität: 16.07.1992 DE 9209549 U
(71) Anmelder: Viessmann, Hans, Dr., D-35088 Battenberg/Eder (DE)
(72) Erfinder: Viessmann, Hans, Dr., D-35088 Battenberg/Eder (DE)
(74) Vertreter: Wolf, Günter, Dipl.Ing.

(57) **Zusammenfassung**

Die Erfindung betrifft eine Bodenabdeckung für Pflanzen aus Fasern auf Zellulosebasis. Um Unkrautbewuchs um Pflanzen herum zu verhindern und um solche Bodenabdeckungen in großer Stückzahl kostengünstig herstellen zu können, ist nach der Erfindung vorgesehen, daß die Abdeckung (1) aus ebenflächig oder angenähert ebenflächig saugverfestigten Altpapier- und/oder Kartonagenabfallschnitzeln gebildet ist und die Abdeckung (1) Kreis-, Polygon- oder Bandform hat, wobei im die Abdeckung (1) bildenden Material mindestens eine Lochung (2) mit eingeformt ist und, von dieser ausgehend, ein ebenfalls eingeformter, am Abdeckungsrand (3) offener Schlitz (4) angeordnet ist. In bevorzugter Ausführungsform ist dabei die Fläche der Abdeckung durch Stege in flache, wannenartige Felder gegliedert und in jedem Feld ist mindestens eine Lochung angeordnet.

## Beschreibung

Die Erfindung betrifft eine Bodenabdeckung für Pflanzen aus Fasern auf Zellulosebasis.

Bei der Aufzucht von Pflanzen oder auch schon bei hochgewachsenen Pflanzen, egal ob es sich dabei um Bäumchen, Büsche oder sonstige Pflanzen handelt, ist es unvermeidbar, daß sich auf den Pflanzflächen Gras- und Unkrautbewuchs einstellt, der früher oder später, will man den Pflanzenwuchs oder die Reifung oder bei Zierpflanzen die "Optik" der Umgebungsfläche nicht beeinträchtigt sehen, entfernt werden muß, was insbesondere bei großflächigen Pflanzanlagen, wie Gemüse-, Erdbeerfelder, Baumschulen oder dgl., arbeits- und damit kostenintensiv ist. Nach der DE-Z "Deutscher Gartenbau 39/89, Seiten 2364 - 2367" ist bekannt, für diesen Zweck sogenannte Mulchpapiere zu verwenden, die jedoch, wie der Name sagt, Papiere sind und auch wie Papiere hergestellt werden müssen. Gleiches gilt für Schichtmaterial gemäß DE-A-40 19 446.

Der Erfindung liegt die Aufgabe Zugrunde, hierfür ein Mittel zu schaffen, mit dem Gras- bzw. Unkrautbewuchs um die Pflanzen herum verhinderbar ist, das aus in ausreichendem Maße verfügbaren Abfallmaterial auf einfache Weise herstellbar ist und das einerseits flüssigkeits- und bis zu einem gewissen Grade auch luftdurchlässig sein soll, andererseits aber auch die Bodenfeuchtigkeit halten soll.

Diese Aufgabe ist nach der Erfindung mit einer Bodenabdeckung gemäß der im Kennzeichen des Anspruches 1 angeführten Merkmale gelöst. Vorteilhafte Ausgestaltungen einer solchen Bodenabdeckung ergeben sich nach den Unteransprüchen. Da die Altpapier- und/oder Kartonagenschnitzel natürlich in sich aus Einzelfasern auf Zellulosebasis bestehen, ist aus diesem Grunde einleitend auf Bodenabdeckungen aus Fasern auf Zellulosebasis Bezug genommen aber auch, weil die Abfallschnitzel mehr oder weniger aufgelöst im Aufschwemmbad enthalten sein können.

Diese erfindungsgemäße Bodenabdeckung erfüllt nicht nur die gestellten Forderungen, sondern sorgt auch für eine Abfall- und Deponieentlastung soweit es die heute in großen Mengen anfallenden Papier- und Kartonagenabfälle betrifft, die damit einer nützlicheren Verwertung zugeführt werden können, verbunden mit dem Vorteil, daß diese im Laufe der Zeit verrottbar und ohne weiteres nach Verrottung in den Boden einarbeitbar sind. Etwa darin enthaltene Kunststoff- oder bspw. Alufolienschnitzel stören dabei nicht, im Gegenteil tragen solche Schnitzelanteile zur Festigkeit der Bodenabdeckung bei.

Die Herstellung der erfindungsgemäßen Bodenabdeckung verlangt dabei nicht etwa eine Aufbereitung der Altpapier- und/oder Kartonagenschnitzel im Sinne einer Papierherstellung, also in Einzelfasern, sondern die Papier- und Kartonagenabfälle sind lediglich zu Schnitzeln zu zerkleinern und in ein Aufschwemmbad einzubringen und werden aus diesem heraus in bekannter Weise von einer eingetauchten Saugform angesaugt und zur Bodenabdeckung in gewünschter Form verfestigt. Erst diese Maßgabe einer direkten Schnitzelverwertung macht die Herstellung der Bodenabdeckung in großen Stückzahlen zu vertretbaren Kosten möglich, abgesehen davon, daß sich aus Schnitzeln gebildete Bodenabdeckungen nicht so schnell auflösen wie aus reinen Faseraufschwemmungen gebildete Abdeckungen.

Vorteilhaft kann dabei im die Abdeckung bildenden Abfallmaterial außer Düngemitteln und/oder Pflanzenschutz- und/oder Säureneutralisationsmittel eingelagert sein, was besonders einfach dadurch zu bewirken ist, daß man diese Mittel dem Aufschwemmbad in der erforderlichen Konzentration zugibt, die damit automatisch mit im Material der Bodenabdeckung eingebunden werden.

Diese Herstellungsmethode läßt es auch zu, von vornherein im die Abdeckung bildenden Material mindestens eine Lochung mit einzuformen und, von dieser ausgehend, einen ebenfalls eingeformten, am Abdeckungsrand offenen Schlitz anzuordnen. In dieser Form ist die Bodenabdeckung auch problemlos um schon höher gewachsene Pflanzen am Boden auflegbar. Diesbezüglich ist aber eine Ausgestaltung auch derart vorsehbar, daß die Abdeckung aus zwei formidentischen Teilen gebildet ist, die jeweils sich verlaufsentsprechende Anlageränder aufweisen, wobei vorteilhaft die beiden formidentischen Teile an ihren Anlagerändern an gleicher Stelle mit sich formentsprechenden Randausnehmungen versehen sein können, die bei Auflage die Pflanze unmittelbar am Boden umfassen.

Solche Lochungen, Randausnehmungen und Schlitzungen müssen dabei wohlgemerkt nicht durch nachträgliche Stanz- bzw. Schneidvorgänge angebracht werden, sondern ergeben sich bei entsprechender Ausbildung der Saugformsiebfläche automatisch mit. Bei entsprechender Gestaltung der Saugformsiebfläche ist es auch ohne weiteres möglich, die gesamte Fläche der Bodenabdeckung mit kleinen Löchern zu versehen bzw. mit Stellen erhöhter Flüssigkeitsdurchlässigkeit.

Unter einer Ausbildung gemäß Anspruch 3 ist bezüglich der Lochungs - bzw. Schlitzvorformungen zu verstehen, daß diese Vorformungen aus der Fläche der Abdeckungen etwas herausragen (wird noch näher erläutert) oder eine etwas geringere Wandstärke haben, welche Vorformungen dann vom Benutzer im dadurch vorteilhaft vorgegebenen Bereich leicht (ggf. nach Anfeuchtung) durchstoßen bzw. herausgetrennt werden können, die bei Auflage die Pflanze unmittelbar am Boden umfassen.

Die gemäß Anspruch 5 vorgesehenen Noppen dienen dazu, daß die Bodenabdeckung nicht vollflächig auf dem Boden aufliegt, was einer Belüftung der abgedeckten Bodenfläche zuträglich ist.

Abgesehen von all diesen Ausgestaltungsmöglichkeiten kann die Bodenabdeckung auch aus mehreren Lagen gebildet sein, was bedeutet, daß einfach zwei formidentische Bodenabdeckungen aufeinandergelegt und in geeigneter Weise miteinander verbunden werden. Dabei besteht die Möglichkeit, die Mittel gemäß Anspruch 2 nicht im Material unterzubringen, sondern zwischen den Lagen oder im Material und zwischen den Lagen.

Abgesehen von der vorerwähnten Verwertbarkeit der Altpapierabfälle hat die erfindungsgemäße Bodenabdeckung den Vorteil, daß deren Hersellung bei weitem nicht so aufwendig ist wie die Herstellung von Mulchpapieren, da hierbei lediglich eine Zerkleinerung der Rohabfälle, deren Einbringung in einen Aufschwemmbehälter und deren Saugverfestigung an einer Saugform erforderlich ist.

Bevorzugt werden Ausführungsformen der Bodenabdeckung nach Anspruch 7 und den diesbezüglich weiteren Ausgestaltungen. Durch die Gliederung der ganzen Abdeckungsfläche in flache, wannenartige Felder mittels der Stege wird verhindert, daß insbesondere bei nicht gegebener Horizontallage auf dem Boden auftreffendes Regen- oder Gießwasser einfach ablaufen kann, sondern sich in den eingetieften Abdeckungsfeldern sammelt und diese durch die Lochungen zum Boden hin verlassen kann. Diese Aufgliederung der Abdeckungsfläche durch Stege stellt im übrigen ebenfalls keine besondere Herstellungsschwierigkeit dar, da sich diese Stege beim Saugverfestigungsverfahren aufgrund einer entsprechend gestalteten Saugform ohne weiteres mit ergeben, wobei diese Stege ebenfalls auch ohne weiteres in Form von zum Boden hin offene Hohlrippen ausgebildet sein können.

Um Unkrautentwicklung im Lochungsbereich bzw. unter den die Lochungen bildenden Löchern zu unterbinden, werden diese vorteilhaft in bezug auf die Erstreckungsebene der Abdeckung geneigt angeordnet, um Lichteinfall, soweit wie möglich zu unterbinden. Gleiches ist auch dadurch zu erreichen, daß die die Lochungen bildenden Löcher in bodenseitig an der Abdeckung angeformten Noppen angeordnet sind.

Um bei länger dauernden Regenperioden oder intensiver Bewässerung eine vorzeitige Auflösung der Abdeckungen zu vermeiden, können übrigens die Abdeckungen mit nässe- und feuchtigekitsbeständigen Bindemitteln getränkt sein, die sich bspw. emulgiert bereits in der Aufschwemmflüssigkeit für das Altpapier befinden können. Dies kann man sich insbesondere bei der erfindungsgemäßen Bodenabdeckung leisten, da ja für einen ausreichenden Wasseraustritt aus den Feldern durch die Lochungen gesorgt ist.

Die erfindungsgemäße Bodenabdeckung wird nachfolgend anhand der zeichnerischen Darstellung von Ausführungsbeispielen näher erläutert.

Es zeigt
- Fig. 1A-D: Draufsichten auf Bodenabdeckungen mit unterschiedlichen Formen;
- Fig. 2: einen Schnitt durch die Bodenabdeckung;
- Fig. 3: eine Draufsicht auf eine Bodenabdeckung in Kreis- und besonderer Ausführungsform;
- Fig. 4: eine Draufsicht auf eine Bodenabdeckung in einer weiteren besonderen Ausführungsform;
- Fig. 5: einen Schnitt längs Linie V-V der Bodenabdeckung gemäß Fig. 6;
- Fig. 6: eine Draufsicht auf die Bodenabdeckungen gemäß Fig. 5;
- Fig. 7: im Schnitt eine zweilagig ausgebildete Bodenabdeckung;
- Fig. 8: eine Draufsicht auf eine kreisscheibenförmige Bodenabdeckung in bevorzugter Ausführungsform;
- Fig. 9: einen Schnitt durch die Bodenabdeckung gemäß Fig. 8 und
- Fig.10-11: Schnitte durch besondere Ausführungsformen der Bodenabdeckung gemäß Fig. 8.

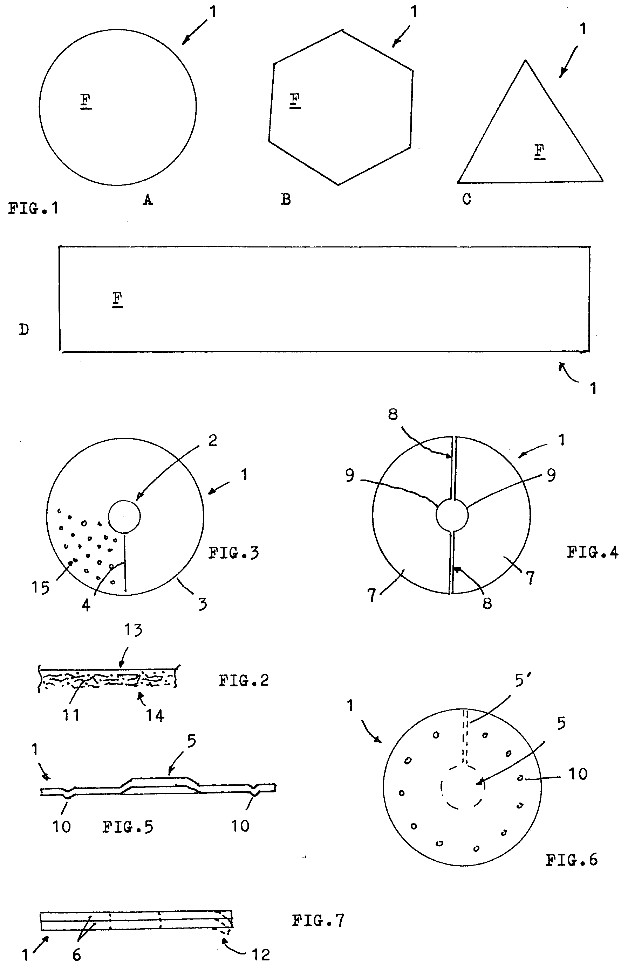

In Fig. 1A-D sind unterschiedliche Formen von Bodenabdeckungen 1 verdeutlicht, die keiner näheren Erläuterung bedürfen. Für alle diese Formen ist wesentlich, daß die Abdeckung 1 aus ebenflächig oder angenähert ebenflächig saugverfestigten Altpapier- und/oder Kartonagenabfallschnitzeln 11 gebildet ist und die Abdeckung 1 Kreis-(Fig. 1A), Polygon-(Fig. 1B,C) oder Bandform (Fig. 1D) hat.

Die ggf. im die Abdeckung 1 bildenden Abfallmaterial zwischengelagerten oder in diesem aufgesaugten Dünge- und/oder Pflanzenschutz- und/oder Säureneutralisationsmittel sind in Fig. 2, die auch die Abfallschnitzel 11 erkennen läßt, lediglich als Punkte angedeutet.

Beim Ausführungsbeispiel nach Fig. 3 ist im die Abdeckung 1 bildenden Material mindestens eine Lochung 2 mit eingeformt und, von dieser ausgehend, ein ebenfalls eingeformter, am Abdeckungsrand 3 offener Schlitz 4 angeordnet. Das Sieb der dafür erforderlichen Saugform ist dabei im Lochungs- und Schlitzbereich saugundurchlässig ausgebildet.

Gemäß Fig. 4 ist die Bodenabdeckung 1 aus zwei formidentischen Teilen 7 gebildet, die jeweils sich verlaufsentsprechende Anlageränder 8 aufweisen und somit, wie dargestellt, aneinander angelegt werden können. Zweckmäßig sind dabei die beiden formidentischen Teile 7 an ihren Anlagerändern 8 an gleicher Stelle mit sich formentsprechenden Randausnehmungen 9 versehen.

Die Bodenabdeckung 1 kann aus genanntem Grund auch, wie in Fig. 5, 6 verdeutlicht, mit bodenseitigen im Abfallmaterial mit ausgeformten Noppen 10 versehen sein und außerdem können bei entsprechender Gestaltung des Saugformsiebes Lochungs- und/oder Schlitzvorformungen 5, 5' ausgebildet werden, die dann für die Inbenutzungnahme Trenn- bzw. Durchstoßvorgaben bilden.

Schließlich ist noch in Fig. 7 die Ausführungsform verdeutlicht, bei der die Bodenabdeckung 1 aus zwei Lagen 6 gebildet ist, wobei die vorerwähnten Dünge- und/oder Pflanzenschutz- und/oder Säureneutralisationsmittel, ggf. in einem eigenen Träger ge- oder enthalten, auch zwischen den beiden Lagen 6 angeordnet sein können, die bspw. ihren Zusammenhalt durch zwei oder mehrere Randverkröpfungen 12, wie gestrichelt angedeutet, erhalten. Da das Material beim Einreißen der Verkröpfungen keine glatten Rißkanten bildet, sondern "ausfranst", bleiben diese Randverkröpfungen 12 stabil, halten die beiden Lagen 6 zusammen und bilden zudem nach unten exponierte Auflagen, die die Funktionen der vorerwähnten Noppen 10 übernehmen können.

Zweckmäßig werden die Bodenabdeckungen 1 mit ihrer glatten, mehr oder weniger harten, die Saugsiebstruktur wiedergebenden Oberfläche 13 auf den Boden aufgelegt, d.h., die sich beim Herstellungsvorgang ergebende rauhe und somit für Regen- oder Gießwasser aufnahmefähigere Seite 14 ist nach oben gerichtet.

Im Ausführungsbeispiel nach Fig. 3 sind die einleitend erwähnten Löcher bzw. Stellen mit erhöhter Flüssigkeitsdurchlässigkeit mit 15 bezeichnet, die sich beim Saugvorgang einfach dadurch ergeben, daß die Saugformsiebfläche an diesen Stellen undurchlässig ausgebildet ist.

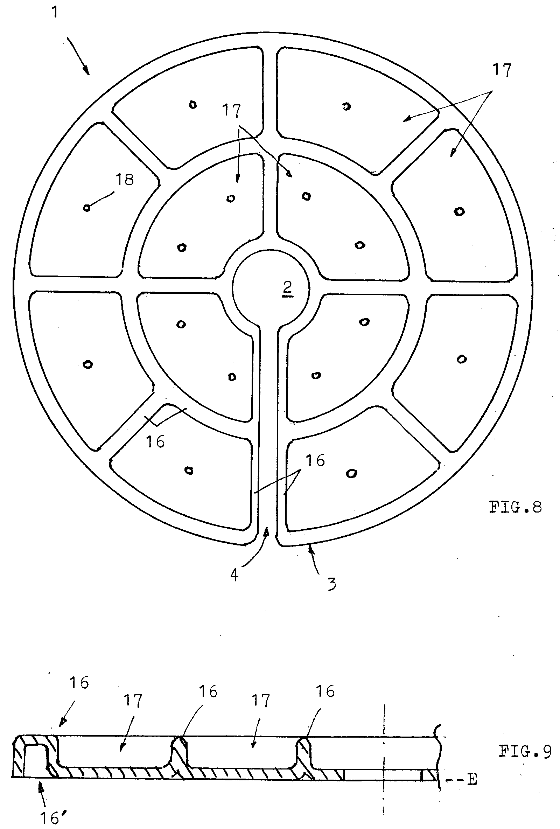

Was die bevorzugten Ausführungsformen betrifft, so wird dazu auf die Fig. 8 bis 12 Bezug genommen.

Für diese Bodenabdeckungen 1 ist wesentlich, daß die Fläche F der Abdeckung 1 durch Stege 16 in flache, wannenartige Felder 17 gegliedert und in jedem Feld 17 mindestens ein Loch 18 angeordnet ist. Dies ist in den Fig. 8, 9 schematisch verdeutlicht, und zwar für eine kreisscheibenförmige Abdeckung gemäß Fig. 1A. Mittig ist in der Bodenabdeckung 1 ebenfalls ein Loch 2 für die betreffende Pflanze vorgesehen, und um die Abdeckung auch an einer bereits bestehenden und etwas hochgewachsenen Pflanze anlegen zu können, ist diese mit einem Radialschlitz 4 versehen, der aber auch von Stegen 16 begrenzt wird.

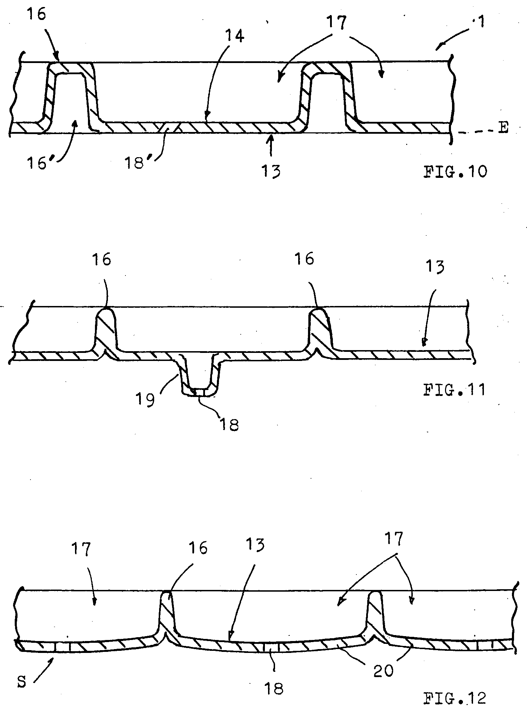

Wie aus Fig. 10 ersichtlich, können die Stege 16 auch ohne weiteres als zum Boden hin offene Hohlrippen 16' ausgebildet werden. Die Lochungen 18 bzw. Löcher 18' sind zur Reduzierung des Lichteinfalls in bezug auf die Erstreckungsebene E der Bodenabdeckung 1 geneigt im Material angeordnet und werden bspw. einfach durch Einstechen mit einem geeigneten Hilfwerkzeug gebildet. Es ist aber auch möglich, bei der Saugformherstellung der Abdeckungen nach unten gerichtete Noppen 19 mit auszuformen (siehe Fig. 11) und dann dort, wie dargestellt, die Löcher 18 anzubringen.

Ferner können gemäß Fig. 12 die Böden 20 der Felder 17 nach unten durchgewölbt ausgebildet werden, wobei dann die Löcher 18' an den tiefsten Stellen S der Böden 20 angebracht werden, sofern diese nicht schon, was grundsätzlich möglich ist, bei der Saugformausformung mit entstehen.

Zweckmäßig werden in den innen liegenden Feldern 17 mehr Löcher als in den äußeren angeordnet, um die Pflanzenwurzeln intensiver durch schnellere Wasserabfuhr aus diesen Feldern bewässern zu können.
Von den Ausführungsbeispielen nach den Fig.9 bis 12 kann allerdings nur die nach Fig.10, bei der die Stege 16 als Hohlrippen 16' ausgebildet sind, mit ihrer rauhen Seite 14 nach oben auf dem Boden aufgelegt werden.
Im übrigen müssen die wannenartigen Felder 17 nicht zwingend die in Fig.8 dargestellten Formen haben, d.h., die Felder 17 können bei entsprechenden Formabweichungen der Stege 16 bspw. auch Kreisform haben.

## Patentansprüche

1. Bodenabdeckung für Pflanzen aus Fasern auf Zellulosebasis,
**dadurch gekennzeichnet,**
daß die Abdeckung (1) aus ebenflächig oder angenähert ebenflächig saugverfestigten Altpapier- und/oder Kartonagenabfallschnitzeln gebildet ist und die Abdeckung (1) Kreis-, Polygon- oder Bandform hat, wobei im die Abdeckung (1) bildenden Material mindestens eine Lochung (2) mit eingeformt ist.

2. Bodenabdeckung nach Anspruch 1,
**dadurch gekennzeichnet,**
daß im die Abdeckung (1) bildenden Abfallmaterial außer Düngemitteln und/oder Pflanzenschutz- und/oder Säureneutralisationsmittel eingelagert sind.

3. Bodenabdeckung nach Anspruch 1 oder 2,
**dadurch gekennzeichnet,**
daß im die Abdeckung (1) bildenden Abfallmaterial Lochungs- und/oder Schlitzvorformungen (5, 5') angeordnet sind.

4. Bodenabdeckung nach einem der Ansprüche 1 bis 3,
**dadurch gekennzeichnet,**
daß die Abdeckung (1) aus zwei formidentischen Teilen (7) gebildet ist, die jeweils sich verlaufsentsprechend Anlageränder (8) aufweisen und diese an gleicher Stelle mit sich formentsprechenden Randausnehmungen (9) versehen sind.

5. Bodenabdeckung nach einem der Ansprüche 1 bis 4,
**dadurch gekennzeichnet,**
daß die Abdeckung (1) mit bodenseitigen im Abfallmaterial mit ausgeformten Noppen (10) versehen ist.

6. Bodenabdeckung nach einem der Ansprüche 1 bis 5,
**dadurch gekennzeichnet,**
daß die Abdeckung (1) mit Löchern (13) oder Stellen erhöhter Flüssigkeitsdurchlässigkeit versehen ist.

7. Bodenabdeckung nach Anspruch 1 oder 2,
**dadurch gekennzeichnet,**
daß die Fläche (F) der Abdeckung (1), durch Stege (16) begrenzt, mindestens ein flaches, wannenartiges Feld (17) aufweist und in diesem mindestens ein Loch (18,18') angeordnet ist.

8. Bodenabdeckung nach Anspruch 7,
**dadurch gekennzeichnet,**
daß die Stege (16) in Form von Hohlrippen (16') ausgebildet sind.

9. Bodenabdeckung nach Anspruch 7 oder 8,
**dadurch gekennzeichnet,**
daß die die Lochung bildenden Löcher (18') in bezug auf die Erstreckungsebene (E) der Abdeckung (1) geneigt in dieser angeordnet ist.

10. Bodenabdeckung nach einem der Ansprüche 7 bis 9,
**dadurch gekennzeichnet,**
daß die die Lochung bildenden Löcher (18) in bodenseitig an der Abdeckung (1) ausgeformten Noppen (19) angeordnet sind.

11. Bodenabdeckung nach einem der Ansprüche 7 bis 10,
**dadurch gekennzeichnet,**
daß die Böden (20) der Felder (17) zur Bodenseite hin ausgewölbt sind und an der tiefsten Wölbungsstelle (S) ein Loch (18) angeordnet ist.

12. Bodenabdeckung nach einem der Ansprüche 1 bis 11,
**dadurch gekennzeichnet,**
daß,von der Lochung (2) ausgehend, ein am Abdeckungsrand (3) offener Schlitz (4) in der Abdeckung angeordnet ist.
